# EUROPEAN PATENT APPLICATION

(11) **EP 4 604 347 A1**
(43) Date of publication of application: **20.08.2025**
(21) Application number: 24157831.9
(22) Date of filing: 15.02.2024
(51) Int. Cl.: H02J 3/14, C25B 1/04, H02J 3/24, H02J 3/28

(54) **AN ELECTROLYSIS SYSTEM, AN ELECTRICAL POWER SYSTEM, A METHOD FOR ADJUSTING AN ELECTRICAL POWER INPUT TO AN ELECTRICAL LOAD, A COMPUTER PROGRAM, A COMPUTER-READABLE STORAGE MEDIUM AND A CONTROLLER**

(71) Applicant: Siemens Energy Global GmbH & Co. KG, 81739 München (DE)
(72) Inventor: Craciun, Bogdan, 91052 Erlangen (DE); Langenberg, Nils, 90461 Nürnberg (DE); Loku, Fisnik, 90768 Fürth (DE)

(57) **Abstract**

The present invention provides an electrolysis system (1) and a method for providing a dampening of active power oscillations in an electrical grid (5) due to sub-synchronous resonances. The electrolysis system (1) comprises at least one electrolyzer (2) that is adapted to convert an electrical power input (3) into an energy carrier by means of an electrolysis process and further comprises a converter (4) that is adapted to provide the electrical power input (3) to the electrolyzer (2) from the electrical grid (5). A converter controller (6) is adapted to determine a frequency deviation (**Δ*f***) of a frequency (***f_{grid}***) of the electrical grid (5) to a reference frequency *(**f_{ref}***). To provide the dampening of the active power oscillations and to provide a stabilizing function, the converter controller (6) is adapted to adjust the electrical power input (3), particularly to the electrolyzer (2), based on the frequency deviation (**Δ*f***).

## Description

The present invention relates to an electrolysis system for providing a dampening of active power oscillations in an electrical grid, an electrical power system comprising the electrolysis system, a method for adjusting an electrical power input to an electrical load, a computer program, a computer-readable storage medium having stored thereon said computer program and a controller comprising said computer-readable storage medium.

An electrical power system is a network of electrical components deployed to supply, transfer, and use electrical power. In an electrical grid for the transfer of electrical power in the electrical power system, sub-synchronous resonances (SSRs) occur stochastically and can manifest themselves as oscillations of an active power over time in the electrical grid. Those sub-synchronous resonances manifest as a frequency superimposed on a reference frequency of **50 *Hz*** or **60 *Hz*** of the electrical grid and manifest in the range of **0.1 *Hz*** to **2.5 *Hz*** around the reference frequency. These sub-synchronous resonances are particularly dangerous for large generators because they induce fault mechanisms in their rotors that can cause maintenance outages and downtime and they could also impact the membrane structure of sensitive electrolyzer cells or other equipment that is sensitive to deviations from normal operating conditions. The sub-synchronous resonances are usually generated by long transmission lines or by small disturbances or fault currents that can occur stochastically in the electrical power system. For example, sub-synchronous resonances can be caused by a short circuit in a generator of a power plant or in a transmission line of the electrical grid.

In order to reduce said oscillations, active stabilizing functions at electrical power generators are currently provided by a power system stabilizer (PSS) and/or an automatic voltage regulator (AVR) of a generator of a conventional, especially fossil fuel or nuclear power plant on the production side of the electrical energy in the electrical power system. Power system stabilizers are specifically designed to control the generators of conventional power plants and are associated with the control of excitation systems. The automatic voltage regulator is an electronic device responsible for maintaining the voltage at the generator output regardless of load changes. Thus, the active power oscillations in the electrical system can be damped by adjusting the active power at the output of the generators of conventional power plants by means of the power system stabilizer system and/or the automatic voltage regulator, thereby providing a stabilizing function to the electrical power system.

However, the retirement of conventional power plants and the addition of renewable electrical energy sources, which inherently do not have such capabilities to dampen said oscillations, may result in a weakening of the electrical power system. Such stabilization capabilities are considered a mandatory feature for renewable electrical energy sources if scenarios of 100% renewable generation on the generation side of the electrical power system are envisioned in the near future. Additional power system equipment that can provide this are converter connected power supplies such as flexible alternating current transmission systems (FACTS) and/or high voltage direct current (HVDC) systems.

In a conventional situation, loads do not contribute to the stabilization of disturbances due to said oscillations, except in load shedding schemes.

It is an object of the present invention to provide a flexible load that provides a stabilizing function to the electrical power system.

A solution is provided by the subject matter according to the independent claims. Advantageous additional embodiments of the invention are described by the dependent claims, the following description and the figures.

The invention relates to an electrolysis system comprising at least one electrolyzer that is adapted to convert an electrical power input into an energy carrier by means of an electrolysis process and further comprising a converter that is adapted to provide the electrical power input to the electrolyzer from an electrical grid, wherein a converter controller is adapted to determine a frequency deviation of a frequency and/or a rate of change of frequency (ROCOF, Rate of Change of Frequency) of the electrical grid to a reference value, particularly a reference frequency.

According to the invention, the converter controller is adapted to adjust the electrical power input, particularly to the electrolyzer, based on the frequency deviation and/or the rate of change of frequency.

In other words, the converter controller is adapted to increase and/or decrease the electrical power input of the converter to the electrolyzer and/or a current conversion level of the electrolyzer, in particular of the electrolysis process, based on the frequency deviation from the reference frequency of the electrical grid. For example, the converter controller may be adapted to detect a rising or falling edge in the current frequency, particularly the frequency deviation, of the electrical grid and may further be adapted to increase or decrease the electrical power input of the converter to the electrolyzer based on the rising or falling edge.

The energy carrier may be hydrogen, for example. Particularly, green hydrogen means that hydrogen is produced by means of a renewable electrical energy source that provides electrical power to an electrolysis process that may split water molecules. The electrolysis process may thus convert an input material, such as water, to produce the energy carrier, such as hydrogen, by means of the electrical power input. In this way, the electrolysis process may be a consumer in the electrical power system which at a large scale (up to a GW scale) may provide an active load for dampening said oscillations of active power in the electrical grid of the electrical power system.

The electrical grid may comprise at least one transmission line between an electrical power source and the electrolysis system in an island operation mode or a plurality thereof in a network operation mode. The electrical grid may therefore be an electrical network connecting the producers with the consumers of electrical power. The electrical energy source may be the renewable electrical energy source. The electrical power input may be an active power that is increased and/or decreased by the converter based on the frequency deviation. The converter may also comprise a transformer and may further be adapted to convert an alternating current from the electrical grid and/or the electrical power source, particularly from the transformer, into a direct current that is fed to the electrolyzer.

The main advantage of electrolysis is that it is a converter connected to the electrical grid. Therefore, it has the potential to control its consumption of electrical energy. This represents a paradigm shift on a large scale, as it allows a large scale electrolysis system to participate in the aforementioned stabilizing functions to dampen active power oscillations in the electrical grid.

This provides the technical effect that oscillations of active power in the electrical grid are detected and damped by means of the electrolysis system which provides a stabilizing function to the electrical grid of the electrical power system.

The electrolysis system also includes embodiments by which additional advantages are obtained.

In one embodiment, the converter controller is further adapted to determine and/or receive on a flag value from an electrolysis controller, wherein the flag value is indicative of the electrolyzer being able to convert more or less electrical power input, and to adjust the electrical power input based on the flag value. In other words, the converter controller may be adapted to adjust the electrical power input based on the flag value from the electrolysis controller that is indicative of the electrolyzer being able to convert more or less electrical power input. The electrolysis controller may be adapted to control the electrolysis process, particularly at conversion level of the electrolysis process, of the electrolyzer. The flag value may comprise an information whether the electrolyzer is capable of converting any more or less electrical power input into the energy carrier or not. For this, the flag value may be a binary value, for example.

Additionally, the flag value may further include a maximum available power that the electrolyzer can provide above a current conversion level of the electrolyzer at the highest and/or a minimum available power level that the electrolyzer can reduce from the current conversion level at the lowest.

This provides the technical effect of allowing the converter controller to fine-tune the electrical power input and thus to fine-tune the dampening of the oscillations of active power in the electrical grid by means of at least one electrolyzer.

In one embodiment, the flag value is further indicative of whether the electrolyzer supports an overload or not. In other words, depending on an electrolyzer type, the flag value may further indicate whether the electrolyzer will temporarily support an overload. This is because some electrolyzer types can support overload while other types of electrolyzers do not. For example, the flag value may further indicate the magnitude of the overload and optionally a maximum allowable time period for which the respective electrolyzer will support the overload. This has the advantage of protecting the electrolyzer while providing a stabilizing function to dampen the oscillations of active power in the electrical grid.

In one embodiment, the converter controller is adapted to adjust the electrical power input to the electrolyzer within a ramping limit of the electrolyzer for changing an operating point and/or after a delay has elapsed. In other words, the ramping limit of an electrolyzer may be a transfer speed from a first conversion level of the electrolyzer of converting the electrical power input into the energy carrier to a second conversion level. The ramping limit may vary depending on the electrolyzer type. The converter controller may be adapted to adjust the conversion level of the electrolyzer within the ramping limit, particularly corresponding to the respective electrolyzer type. For example, based on the maximum power or minimum power indicated by the flag value, the converter may be adapted to adjust the current, first conversion level of the electrolyzer to the second conversion level based on the maximum and/or minimum power within the ramping limit. This has the advantage of protecting the electrolyzer while at the same time fine-tuning the dampening of the active power oscillations in the electrical grid depending on the electrolyzer type.

Additionally or alternatively, the converter controller may be adapted to adjust the electrical power input to the electrolyzer, particularly the conversion level of the electrolyzer from the first conversion level to the second conversion level, after a time delay has elapsed. In other words, the controller of the converter can be set to wait for a predetermined time period before starting to adjust the electrical power input. This has the advantage that an over-reaction can be avoided, allowing the dampening of active power oscillations in the electrical grid to be synchronized with other stabilizing functions in the electrical grid.

In one embodiment, the delay is determined based on the frequency deviation and/or the rate of change of frequency of the electrical grid. In other words, the time delay or the predetermined time period may elapse after the frequency deviation has surpassed the frequency deviation threshold and/or after a change rate of the frequency has surpassed a change rate threshold. This has the advantage that the dampening of the oscillations of active power in the electrical grid can be further synchronized with other stabilizing functions in the electrical grid while the electrolyzer can be protected.

The invention further relates to an electrical power system and/or an electrical load comprising said electrolysis system. The electrical power system may be a network of electrical components deployed to supply, transfer, and use electric power. In other words, the electrical power system may comprise an entirety of all technical equipment required for generation, transmission and distribution of electrical energy within a control zone of a distribution area where electrical energy is provided from a producer to a consumer.

The electrical load may be an apparatus or system that is adapted to consume electrical power. The electrical load may further comprise the electrolysis system and/or the electrolyzer. Hence, the electrical load may be an inert consumer of electrical power.

The invention further relates to a method for adjusting an electrical power input to an electrical load, particularly to an electrolyzer of an electrolysis system that comprises the electrolyzer converting the electrical power input into an energy carrier by means of an electrolysis process and that further comprises a converter providing the electrical power input to the electrolyzer from an electrical grid, comprising the steps of:
- determining a frequency deviation of a frequency and/or a rate of change of frequency (RoCoF) of the electrical grid to a reference value, particularly a reference frequency;
- adjusting the electrical power input to the electrical load, particularly to the electrolyzer, based on the frequency deviation and/or the rate of change of frequency.

In other words, the converter may measure, particularly monitor, a frequency of the electrical network and determine a frequency deviation from the reference frequency of the electrical grid. The reference frequency may be **50 *Hz*** or **60 *Hz.*** For example, the converter controller may determine the frequency deviation, particularly a rising or falling edge of the current frequency of the electrical grid, and may increase or decrease the electrical power input to the electrolyzer and/or the conversion level of the electrolysis process of the electrolyzer based thereon. The energy carrier may be hydrogen, for instance.

This provides the technical effect that oscillations of active power in the electrical grid are detected and damped by means of the electrolyzer which provides a stabilizing function to the electrical grid of the electrical power system.

In one embodiment, the method further comprises the steps of:
- determining and/or receiving a flag value indicative of the electrical load being able to consume more or less electrical power input, particularly indicative of the electrolyzer being able to convert more or less electrical power input into the energy carrier;
- adjusting the electrical power input based on the flag value.

In other words, an electrolysis controller may determine and transmit the flag value to the converter controller. Alternatively, the converter controller may determine the flag value. The flag value may be a binary signal that may indicate to the converter controller whether the electrolyzer is able to increase or decrease a current conversion level of the electrolysis process. For example, if the flag value is positive that the electrolyzer can increase or decrease the current conversion level of the electrolysis process, the converter controller may increase or decrease the electrical power input to the electrolyzer based on the flag value.

Additionally, the flag value may further comprise a maximum available power that the electrolyzer is capable of providing above a current conversion level of the electrolysis process as and/or a minimum available power level that the electrolyzer is capable of reducing from the current conversion level of the electrolysis process. Thus, the conversion level of the electrolyzer may be increased to the maximum power level at the highest or decreased to the minimum power level at the lowest.

This provides the technical effect of allowing the converter controller to fine-tune the electrical power input.

In one embodiment, the flag value is further indicative of whether the electrical load, particularly the electrolyzer, supports an overload or not. In other words, the conversion level of the electrolyzer may be increased to the maximum power level plus an overload level to the highest optionally for a maximum allowable time period. This has the advantage of protecting the electrolyzer while providing a stabilizing function to dampen the oscillations of active power in the electrical grid.

In one embodiment, the electrical power input is adjusted within an allowable ramping limit of the electrical load, particularly of the electrolyzer, and/or within a frequency deviation threshold and/or after a delay. In other words, the conversion level is increased or decreased within an allowable conversion level change rate of the electrolyzer, particularly of the electrolysis process. This has the advantage of protecting the electrolyzer while at the same time fine-tuning the dampening of the active power oscillations in the electrical grid depending on the electrolyzer type.

Additionally or alternatively, the converter controller may adjust the electrical power input to the electrolyzer, particularly the conversion level of the electrolysis process from the first conversion level to the second conversion level, after the time delay has elapsed. In other words, the controller of the converter may wait for a predetermined time period before starting to adjust the electrical power input. This has the advantage that an over-reaction can be avoided, allowing the dampening of active power oscillations in the electrical grid to be synchronized with other stabilizing functions in the electrical grid.

In one embodiment, the delay is determined based on the frequency deviation and/or the rate of change of frequency of the electrical grid. In other words, the time delay or predetermined time period may elapse after the frequency deviation has exceeded the frequency deviation threshold and/or a change rate of the frequency has exceeded a change rate threshold. This has the advantage that the dampening of the oscillations of active power in the electrical grid can be further synchronized with other stabilizing functions in the electrical grid while the electrolyzer can be protected.

The invention further relates to a computer-program comprising instructions which, when the program is executed by a controller, particularly by a converter controller and/or an electrolysis controller, cause the controller to carry out the steps of said method. The controller may comprise means to execute said method, particularly means to make a converter increase or decrease an electrical power input to an electrolyzer. Additionally, the controller may comprise means to adjust a conversion level of an electrolysis process of the electrolyzer which converts the electrical power input into an energy carrier.

The invention also relates to a computer-readable storage medium having stored thereon said computer program. In other words, the computer-readable storage medium may be a punched card, a (floppy) disk storage medium, a hard disk, a CD, a DVD, an USB (Universal Serial Bus) storage device, a RAM (Random Access Memory), a ROM (Read Only Memory) and/or an EPROM (Erasable Programmable Read Only Memory). Preferably, the computer-readable storage medium may be a RAM or a ROM, wherein particularly a flash memory is used. The computer readable-storage medium may also be a data communication network which allows downloading a program code, such as the Internet for example, or further systems.

The invention further relates to a controller, particularly a converter controller and/or an electrolysis controller, comprising said computer-readable storage medium. The controller may be programmable logic controller (PLC). The controller may comprise at least one processor and said computer-readable storage medium, wherein the computer-readable storage medium comprises said computer program which, when executed by the at least one processor, cause the controller to perform the method as described above.

In other words, the at least one processor may be a microprocessor and/or a microcontroller and/or a FPGA (Field Programmable Gate Array) and/or a DSP (Digital Signal Processor). The controller may further comprise means to execute said method as described above, particularly means to control the converter and/or a conversion level of an electrolysis process of the electrolyzer which converts an electrical power input into an energy carrier. The controller may further comprise means to determine a flag value, particularly of a maximum excess electrical power above a current conversion level of the electrolysis process which the electrolyzer can additionally convert into the energy carrier at the highest and/or a minimum electrical power the electrolyzer can reduce from the current conversion level of the electrolysis process at the lowest. Additionally, the converter may comprise means to determine an overload capacity of the electrolyzer, particularly based on an electrolyzer type. Therefore, the controller may comprise means to make the converter increase or decrease a direct current based electrical power input to the electrolyzer from an alternating current. Additionally, the controller may comprise means to adjust the conversion level of electrolysis process and/or an operating point of the electrolyzer.

The invention also relates to an electrical converter and/or an electrical load, particularly an electrolyzer, comprising said controller. An electrolysis system may comprise the converter and/or the electrolyzer. The electrical load may be an apparatus or system that is adapted to consume electrical power. The electrical load may further comprise the electrolysis system and/or the electrolyzer. Hence, the electrical load may be an inert consumer of electrical power.

The invention also relates to an electrolysis system comprising said controller.

The invention also relates to realizations comprising a combination of the features of several of the described embodiments.

### Brief description of the drawings

The present disclosure will be more readily appreciated by reference to the following detailed description when being considered in connection with the accompanying drawings in which:
- Figure 1: shows a schematic progression of sub-synchronous resonances (SSR) over time that show up as oscillations of active power in an electrical grid with and without using an active stabilization function;
- Figure 2: schematically shows the effects of providing an active stabilizing function on a load side in an electrical power system;
- Figure 3: schematically shows an electrolysis system providing such active stabilizing function on the load side;
- Figure 4: schematically shows a control path for said electrolysis system; and
- Figure 5: schematically shows a flow diagram of a method for operating said electrolysis system.

In the following, the invention will be explained in more detail with reference to the accompanying figure. In the Figure, like elements are denoted by identical reference numerals and repeated description thereof may be omitted in order to avoid redundancies.

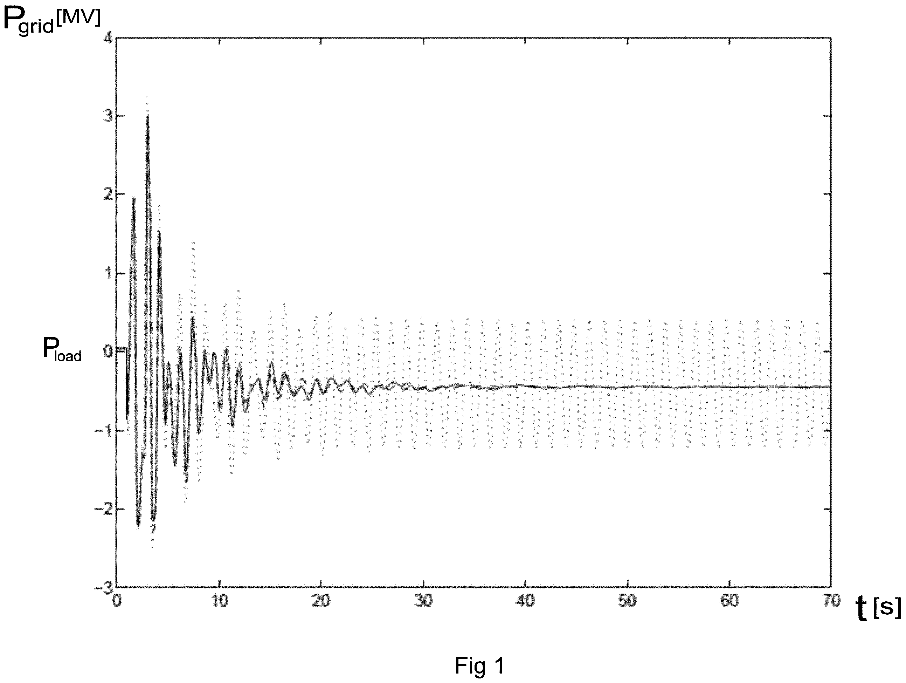

Fig. 1 shows sub-synchronous resonances that show up as oscillations of a current active power ***P_{grid}*** in an electrical grid of an electrical power system over the time ***t*.** Said sub-synchronous resonances manifest as a superimposed frequency over the normal reference frequency ***f_{ref}*** of **50 *Hz*** or **60 *Hz*** and manifest in the range from **0.1 *Hz*** to **2.5 *Hz*** about the reference frequency ***f_{ref}*** of the electrical grid. These sub-synchronous resonances are usually generated by long transmission lines or by small faults in the electrical grid and can appear stochastically due to a short circuit in a generator of a power plant or in a transmission line of the electrical grid, for instance. Thus, these sub-synchronous resonances add some random noise to the current active power ***P_{grid}*** that is transmitted by the electrical grid from a producer on a production side to a consumer of electrical power on a load side. Here, the dotted line in Fig. 1 shows the deviations of the active power ***P_{grid}*** without using an active power stabilization function which causes the active power ***P_{grid}*** to continuously oscillate about a balanced active power equilibrium with an electrical power ***P_{load}*** that is currently consumed by the load side. In contrast to the dotted line without the active stabilizing function, the continuous line shows the course of active power ***P_{grid}*** with an active stabilization function wherein the active power ***P_{grid}*** converges to a stable value about the balanced active power equilibrium wherein the active power ***P_{grid}*** equals the electrical power ***P_{load}.***

To reduce said oscillations of the active power ***P_{grid}*,** said active stabilization functions are currently provided by a power system stabilizer and/or an automatic voltage regulator of a power generator of non-renewable, conventional a power plant. Additional power system equipment which also can provide such a stabilizing function may be converter interfaced power supplies such as flexible alternating current transmission systems (FACTS) and/or high voltage direct current systems (HVDC). Consequently, transmission system operators start to request grid stabilizing functions by imposing controls which can emulate the behavior of power system stabilizer and/or the automatic voltage regulator of the generator of a non-renewable, conventional power plant in their grid codes (GC) and regulations.

However, retirement of the non-renewable, conventional power plants and addition of renewable electrical energy sources which intrinsically do not have such a stabilizing function to damp said oscillations of the active power ***P_{grid}*** may destabilize the electrical power system. Therefore, such stabilizing functions are seen as a mandatory feature for renewable electrical energy sources if scenarios with 100% renewable generation in the electrical power system are foreseen in the near future.

In a conventional situation, the loads in the electrical power system do not contribute to said stabilization function for dampening said oscillations of the active power ***P_{grid}*** in the electrical grid. This can be done by using an electrolysis system on the load side of the electrical power system. The main advantage of the electrolysis system is that it is a converter connected to the electrical grid. Therefore, it has the potential to control it's power consumption, which allows the electrolysis system to participate in said stabilizing functions in an electrical power system.

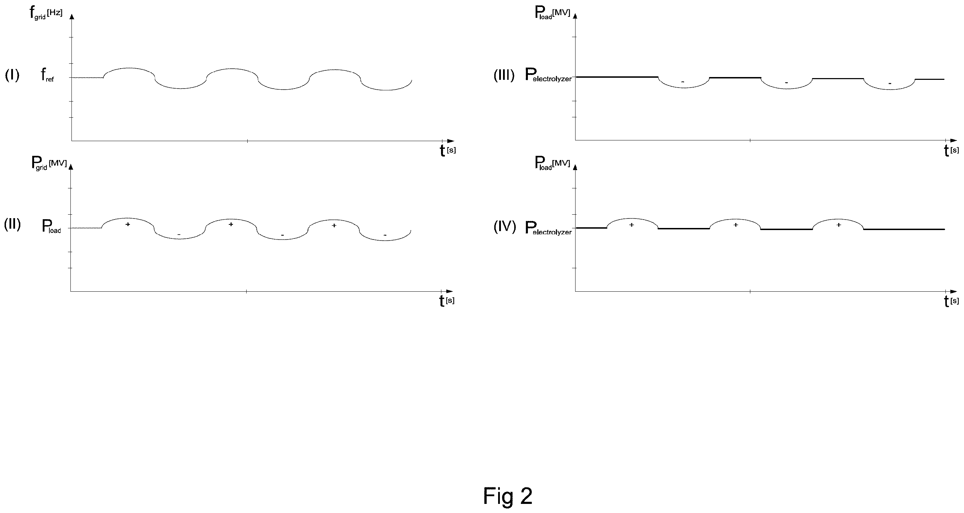

Fig. 2 shows a time-frequency perspective of a progression of frequency ***f_{grid}*** and a current active power ***P_{grid}*** in the electrical grid on a production side of an electrical power system which comprises an electrolysis system as a load that detects and damps the oscillations due to sub-synchronous resonances. For instance, (I) in Fig. 2 on the left shows deviations of a current network frequency ***f_{grid}*** in an electrical grid of the electrical power system over time about a reference frequency ***f_{ref}*** which may be **50 *Hz*** or **60 *Hz,*** for example. Those frequency deviations correspond to fluctuations of a current active power ***P_{grid}*** that is transmitted by the electrical grid that is above or below a current electrical power that is consumed by a load ***P_{load}*** as depicted in (II) . As depicted in (I) and (II), the frequency ***f_{grid}*** and the active power ***P_{grid}*** fluctuate in the same manner.(II) also describes the necessary actions by the load side ("+" for power consumption increase and "-" for power consumption decrease) to stabilize the electrical grid.

As to the load side in the electrical power system on the right in Fig. 2, the power consumption of the electrolyzer ***P_{electrolyzer},*** particularly the electrical power input to the electrolyzer and/or a conversion level of the electrolyzer, as part of electrical power of the load side ***P_{load}*** decreases when the current frequency ***f_{grid}*** is below the reference frequency ***f_{grid}*** as shown in (III), whereas the power consumption of the electrolyzer ***P_{electrolyzer},*** particularly the electrical power input to the electrolyzer and/or the conversion level of the electrolyzer, increases when the current frequency ***f_{grid}*** is above the reference frequency ***f_{ref}*** as shown in (IV) . This provides an adaptation of the electrical power on the load side ***P_{load}*** to the current active power provided by the electrical grid ***P_{grid}*.** For this, a controller of an electrolysis system may decrease the conversion level of an electrolysis process during a period of lacking active power ***P_{grid}*** as depicted in (III)and/or the controller may increase the conversion level of the electrolysis process which converts an excess of active power ***P_{grid}*** into an energy carrier as depicted in (IV). In this way, the load side may contribute to dampening oscillations of active power ***P_{grid},*** particularly due to sub-synchronous resonances, in the electrical grid.

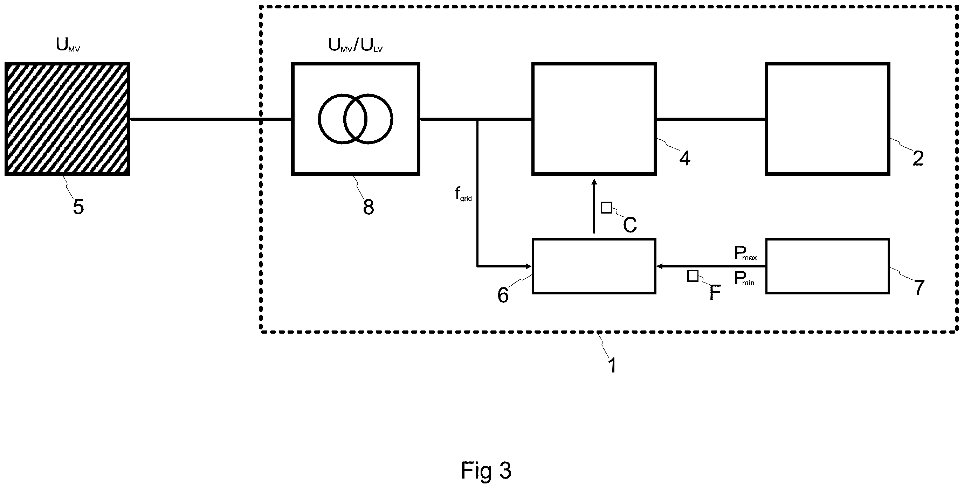

Fig. 3 schematically shows an electrolysis system 1 providing said stabilization function on the load side by adjusting the active power ***P_{grid}*** which the electrolysis system 1 converts into the energy carrier. The electrolysis system 1 comprises a transformer 8 and a converter 4, wherein the transformer 8 connects the converter 4 to the electrical grid 5. The electrolysis system 1 further comprises an electrolyzer 2 that is adapted to convert an electrical power input provided by the converter 4 into an energy carrier such as hydrogen by means of an electrolysis process. The electrolysis system 1 further comprises a converter controller 6 and an electrolysis controller 7. The transformer 8 is adapted to transform a medium level voltage ***U_{MV}*** of the electrical grid 5 into a low level voltage ***U_{LV}*** that is fed to the converter 4 for providing the electrical power input to the electrolyzer 2 for running the electrolysis process. For example, the converter 4 is adapted to provide a direct current as electrical power input to the electrolyzer 2 wherein the converter 4 converts the direct current from the low voltage alternating current on the load side of the transformer 8. The electrolysis controller 7 is adapted to control a conversion level of the electrolysis process of the electrolyzer 2.

The converter 4 is adapted to measure the frequency ***f_{grid}*** of the electrical grid 5 and to react based on the measured frequency ***f_{grid}*** which is superimposed over the 50/60Hz reference frequency ***f_{ref}*** of the electrical grid 5.

The converter controller 6 is adapted to measure the frequency ***f_{grid}*** of the electrical grid 5 and to hand over a command ***C*** to the converter 4 for adjusting the electrical power input for the electrolysis process to the electrolyzer 2 based on the frequency ***f_{grid}*,** particularly based on a frequency deviation **Δ*f*** from the reference frequency ***f_{grid}*.** Here, the frequency deviation **Δ*f*** is to remain within a frequency deviation threshold ***Δfₗᵢₘ*** about the reference frequency ***f_{ref}.*** The reference frequency ***f_{ref}*** may be **50*Hz*** or **60*Hz*** or any other reference frequency depending on the respective electrical grid 5 the electrolysis system 1 is connected to.

The electrolysis controller 7 is further adapted to determine and to transmit a flag value ***F*** to the converter controller 6 which is indicative of whether the electrolyzer 2 can convert any further or less electrical power input into the energy carrier or not. Alternatively, the converter controller 6 may determine the flag value ***F*.**

Additionally or alternatively, the flag value ***F*** comprises a maximum electrical power ***Pₘₐₓ*,** particularly a maximum excess electrical power over a current conversion level of the electrolyzer, which the electrolyzer 2 can further convert into the energy carrier from a current conversion level to the highest.

Additionally or alternatively, the flag value ***F*** may comprise a minimum electrical power ***Pₘᵢₙ,*** particularly a current electrical power of the current conversion level, which the electrolyzer 2 can reduce from the current conversion level to the lowest.

Additionally, the flag value ***F*** may be indicative of whether the electrolyzer 2 is capable of converting an overload electrical power above the maximum electrical power ***Pₘₐₓ*** into the energy carrier, optionally within an allowable time period.

Based on a positive flag value ***F*** that indicates that the electrolyzer 2 can convert any further or less electrical power into the energy carrier, the converter controller 6 is adapted to transmit the command ***C*** to the converter 4 to adjust the electrical power input based on the frequency deviation **Δ*f*** of the grid frequency ***f_{grid}*** from the reference frequency ***f_{ref}*** of the electrical grid 5. For instance, if the grid frequency ***f_{grid}*** drops below a frequency deviation threshold ***Δfₗᵢₘ*** below the reference frequency ***f_{ref},*** the converter controller 6 is adapted to transmit the command ***C*** to the converter 6 to decrease the electrical power input to the electrolyzer 2, whereas if the frequency ***f_{grid}*** rises above the frequency deviation threshold ***Δfₗᵢₘ*** above the reference frequency ***f_{ref},*** the converter controller 6 is adapted to transmit the command ***C*** to the converter 6 to increase the electrical power input to the electrolyzer 2. In this way, a stabilizing function to the electrical grid 5 from a load side of the electrical power system is provided. Additionally or alternatively, the command ***C*** may increase or decrease the conversion level of the electrolysis process of the electrolyzer 2.

An important aspect of an electrolysis system 1 is also an allowable power ramping limit ***ΔPₗᵢₘ*** for the power response of the electrolyzer 2. The ramping limit **Δ*Pₗᵢₘ*** of the electrolyzer 2 may be an adaptation speed from a first conversion level of the electrolysis process to a second conversion level which depends on an electrolyzer type of the electrolyzer 2. Thus, such power oscillation dampening might be more applicable to some electrolyzer types which offer the most flexibility in terms of capability of power ramps. An electrolyzer 2 with a higher ramping rate or ramping limit **Δ*Pₗᵢₘ*** is thus more flexible. The converter controller 6 is further adapted to transmit a corresponding command ***C*** to the converter 6 to increase or decrease the electrical power input to the electrolyzer 2 within the corresponding ramping limit **Δ*Pₗᵢₘ*** of the electrolyzer 2. In this way, a stabilizing function to the electrical grid 5 is provided while the electrolyzer 2 is protected. This also allows a further fine-tuning of the dampening of the oscillations of active power ***P_{grid}*** in the electrical grid 5.

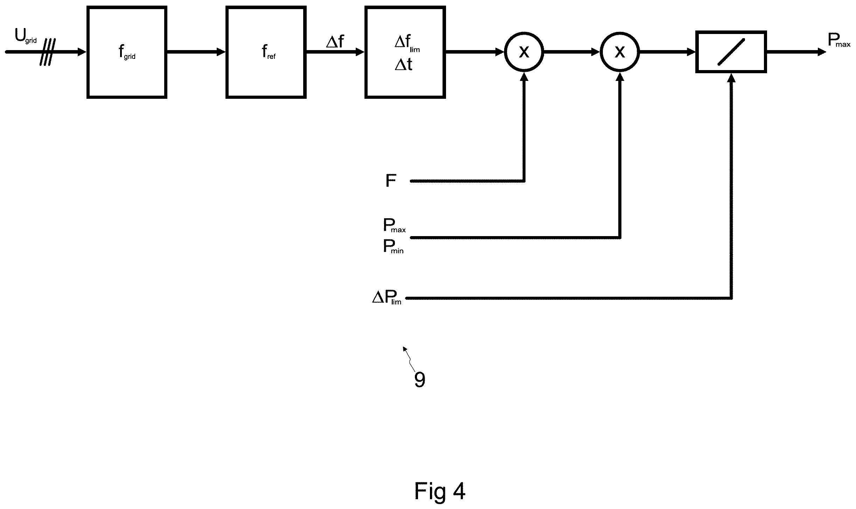

Fig. 4 schematically shows a control path 9 of the electrolysis system 1, particularly of the electrolyzer 2. Instead of a voltage ***U_{grid}*** of the electrical grid 5, a frequency ***f_{grid}*** of the electrical grid 5 is monitored by the converter controller 6. In contrast to the voltage ***U_{grid},*** the frequency ***f_{grid}*** is the same everywhere in the electrical grid 5 and is further indicative of a current electrical power balance of the active power ***P_{grid}*** in the electrical grid 5. Based on the monitored frequency ***f_{grid}*** and the known reference frequency ***f_{ref},*** a frequency deviation **Δ*f*** is determined by the converter controller 6. Further, the adjustment of the electrical power input to the electrolyzer 2 by the converter controller 6 is started when the frequency deviation **Δ*f*** surpasses the frequency deviation threshold **Δ*fₗᵢₘ*.** The frequency deviation threshold ***Δfₗᵢₘ*** may be predetermined. For instance, the converter 6 may detect rising or falling edges of the frequency deviation **Δ*f*** that optionally may respectively surpass a frequency deviation threshold value.

Additionally, the electrical power input may be adjusted after a time delay **Δ***t* has elapsed. The delay **Δ*t*** may provide an avoidance of frequency resonances or an over-reaction of the active stabilizing function. Further, a synchronization with other stabilizing functions in the electrical grid may be provided.

Further, the electrical power input is only adjusted when the flag value ***F*** indicates whether the electrolyzer 2 is capable of converting any additional electrical power into the energy carrier or not. Additionally, the flag value ***F*** may be indicative of whether the electrolyzer 2 can accept an overload, optionally for an allowable time period. In this way, the electrolyzer 2 is protected.

A maximum electrical power input or a maximum excess electrical power input ***Pₘₐₓ*** to the electrolyzer 2 is determined and/or received by the converter controller 6 from an electrolysis controller 7. The flag value ***F*** may comprise said electrical power input or a maximum excess electrical power input ***Pₘₐₓ.*** The converter controller 6 may receive this this information with the flag value ***F*** from the electrolysis controller 7, for instance. The flag value ***F*** comprises a maximum electrical power ***Pₘₐₓ,*** particularly a maximum excess electrical power over a current conversion level of the electrolyzer 2, which the electrolyzer 2 can further convert into the energy carrier from a current conversion level, particularly to the highest.

Additionally or alternatively, the flag value ***F*** may comprise a minimum electrical power ***Pₘᵢₙ,*** particularly a current electrical power of the current conversion level, which the electrolyzer 2 can reduce from the current conversion level, particularly to the lowest.

Additionally, the converter controller 6 adjusts the conversion level of the electrolyzer 2 within an allowable ramping limit **Δ*Pₗᵢₘ*** of the electrolyzer 2. Thus, the converter controller 6 may be adapted to transmit a corresponding command ***C*** to the converter 4 that causes the converter 4 to adjust, particularly to increase or decrease, the electrical power input to the electrolyzer 2 and/or the conversion level of the electrolyzer 2 within the respective ramping limit **Δ*Pₗᵢₘ*** of the electrolyzer 2.

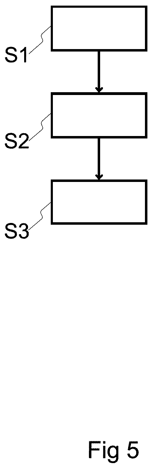

Fig. 5 schematically depicts a flow diagram of a method for controlling the electrolysis system 1 for using it as a dampening element for dampening the oscillations of active power ***P_{grid}*** in the electrical grid 5 for a controller 6, 7 of the electrolysis system 1, particularly the converter controller 6 and/or the electrolysis controller 7.

In a first step S1, a frequency deviation **Δ*f*** of a grid frequency ***f_{grid}*** of the electrical grid 5 to a reference frequency ***f_{ref}*** is determined. For instance, a rising or falling edge of the frequency deviation **Δ*f*** is determined.

In a second step S2, a flag value ***F*** indicative of the electrolyzer 2 being able to convert more or less electrical power input 3 into the energy carrier is determined or received by the converter controller 6 from the electrolysis controller 7, wherein the electrolysis controller 7 may determine the flag value ***F***. Additionally, the flag value ***F*** is indicative of whether the electrolyzer 2 supports an overload or not. Thus, the amount of power response to be contributed to damp the oscillations of active power ***P_{grid}*** by the respective electrolyzer 2 can be determined. The electrical power input 3 and/or the conversion level of the electrolysis process of the electrolyzer 2 is adjusted based on the flag value ***F***.

In a third step S3, the electrical power input 3, particularly to the electrolyzer 2, is adjusted based on the frequency deviation **Δ*f*** and/or based on the flag value ***F***. For this, the converter controller 6 is adapted to transmit a corresponding command ***C*** to the converter 4 that causes the converter 4 to adjust the electrical power input to the electrolyzer 2 and/or the electrolysis controller 7 is adapted to transmit the command ***C*** to the electrolyzer 2 to adjust the conversion level of the electrolysis process.

Additionally, the electrical power input 3 and/or the conversion level of the electrolysis process is adjusted within an allowable ramping limit **Δ*Pₗᵢₘ*** of the electrolyzer 2, and/or within a frequency deviation threshold ***Δfₗᵢₘ*** and/or after a delay **Δ*t*.** Here, the delay **Δ*t*** may be determined based on the frequency deviation **Δ*f*** and/or a change rate of the frequency ***f_{grid}*** of the electrical grid 5.

Thus, as a load or consumer of electrical energy, the electrolysis system 1 is able to provide the same stabilizing function as the production side of conventional power plants, thus contributing to the stability of the electrical power system. This is a feature that the electrical power system will greatly need as non-renewable, conventional generation of electrical power is slowly replaced by renewable electrical energy sources.

It will be obvious for a person skilled in the art that these embodiments and items only depict examples of a plurality of possibilities. Hence, the embodiments shown here should not be understood to form a limitation of these features and configurations. Any possible combination and configuration of the described features can be chosen according to the scope of the invention.

## Claims

1. Electrolysis system (1) comprising at least one electrolyzer (2) that is adapted to convert an electrical power input (3) into an energy carrier by means of an electrolysis process and further comprising a converter (4) that is adapted to provide the electrical power input (3) to the electrolyzer (2) from an electrical grid (5), wherein a converter controller (6) is adapted to determine a frequency deviation (**Δ*f***) of a frequency (***f_{grid}***) and/or a rate of change of frequency (RoCoF) of the electrical grid (5) to a reference value, particularly a reference frequency (***f_{ref}***),
**characterized in that**
the converter controller (6) is adapted to adjust the electrical power input (3), particularly to the electrolyzer (2), based on the frequency deviation (**Δ*f***) and/or the rate of change of frequency (RoCoF).

2. Electrolysis system (1) according to claim 1, **characterized in that** the converter controller (6) is further adapted to determine and/or receive on a flag value (***F***) from an electrolysis controller (7), wherein the flag value (***F***) is indicative of the electrolyzer (2) being able to convert more or less electrical power input (3), and to adjust the electrical power input (3) based on the flag value (***F***).

3. Electrolysis system (1) according to claim 2, **characterized in that** the flag value (***F***) is further indicative of whether the electrolyzer (2) supports an overload or not.

4. Electrolysis system (1) according to one of the preceding claims, **characterized in that** the converter controller (6) is adapted to adjust the electrical power input (3) to the electrolyzer (2) within a ramping limit (**Δ*Pₗᵢₘ***) of the electrolyzer (2) for changing an operating point and/or after a delay (**Δ*t***) has elapsed.

5. Electrolysis system (1) according to claim 4, **characterized in that** the delay (**Δ*t***) is determined based on the frequency deviation (**Δ*f***) and/or the rate of change of frequency(RoCoF) of the electrical grid (5).

6. Electrical power system (1)and/or an electrical load, comprising the electrolysis system (1) according to one of the claims 1 to 5.

7. Method for adjusting an electrical power input (3) to an electrical load, particularly to an electrolyzer (2) of an electrolysis system (1) that comprises the electrolyzer (2) converting the electrical power input (3) into an energy carrier by means of an electrolysis process and that further comprises a converter (4) providing the electrical power input (3) to the electrolyzer (2) from an electrical grid (5), comprising the steps of:
- determining a frequency deviation (**Δ*f***) of a frequency (***f_{grid}***) and/or a rate of change of frequency (RoCoF) of the electrical grid (5) to a reference value, particularly a reference frequency (*f_{ref}*);
- adjusting the electrical power input (3) to the electrical load, particularly to the electrolyzer (2), based on the frequency deviation (**Δ*f***) and/or the rate of change of frequency (RoCoF).

8. Method according to claim 7, further comprising the steps of:
- determining and/or receiving a flag value (***F***) indicative of the electrical load being able to consume more or less electrical power input, particularly indicative of the electrolyzer (2) being able to convert more or less electrical power input (3) into the energy carrier;
- adjusting the electrical power input (3) based on the flag value (***F***).

9. Method according to claim 8, **characterized in that** the flag value (***F***) is further indicative of whether the electrical load, particularly the electrolyzer (2), supports an overload or not.

10. Method according to one of the claims 7 to 9, **characterized in that** the electrical power input (3) is adjusted within an allowable ramping limit (**Δ*Pₗᵢₘ***) of the electrical load, particularly of the electrolyzer (2), and/or within a frequency deviation threshold (**Δ*fₗᵢₘ***) and/or after a delay (**Δ*t***).

11. Method according to claim 10, **characterized in that** the delay (**Δ*t***) is determined based on the frequency deviation (**Δ*f***) and/or the rate of change of frequency (RoCoF) of the electrical grid (5).

12. Computer program comprising instructions which, when the program is executed by a controller (6, 7), particularly by a converter controller (6) and/or an electrolysis controller (7), cause the controller (6, 7) to carry out the steps of the method of one of the claims 7 to 11.

13. Computer-readable storage medium having stored thereon the computer program of claim 12.

14. Controller (6, 7), particularly a converter controller (6) and/or an electrolysis controller (7), comprising the computer-readable storage medium of claim 13.

15. Electrical converter (4) and/or an electrical load, particularly an electrolyzer (2), comprising the controller (6, 7) of claim 14.
